**Europäisches Patentamt**

**European Patent Office**

**Office européen des brevets**

(19)

(11) Veröffentlichungsnummer : **0 669 096 A1**

(12) ## EUROPÄISCHE PATENTANMELDUNG

(21) Anmeldenummer : **95810121.4**

(22) Anmeldetag : **23.02.95**

(51) Int. Cl.$^6$ : **A47J 45/07**

(30) Priorität : **25.02.94 CH 568/94**

(43) Veröffentlichungstag der Anmeldung :
**30.08.95 Patentblatt 95/35**

(84) Benannte Vertragsstaaten :
**AT BE DE ES FR GB IT**

(71) Anmelder : **AMC International Alfa Metalcraft
Corporation AG
Buonaserstrasse 30
CH-6343 Rotkreuz (CH)**

(72) Erfinder : **Gebhardt, Lutz
Immostrasse 5
CH-6405 Immensee (CH)**

(74) Vertreter : **Schick, Carl et al
Isler & Pedrazzini AG
Patentanwälte
Postfach 6940
CH-8023 Zürich (CH)**

(54) **Griffknopf für Küchengeräte.**

(57)     Der Griffknopf ist als Saugnapf (2) mit einem trichter förmigen Teil (7) aus einem elastischen Material ausgebildet.

Der Saugnapf (2) weist eine stumpfkegelförmige Wand (4) auf.

Der innere Rand des trichterförmigen Teils (7) bildet im Querschnitt einen spitzen Winkel w mit einer senkrecht zur Symmetrieachse (Y) des Saugnapfs (2) verlaufenden Ebene. Im Bereich zwischen dem trichterförmigen Teil (7) und der Wand (4) im Innern des Saugnapfs (2) ist eine innere Schulter (8) ausgebildet. Der Saugnapf (2) ermöglicht eine griffknopflose Schüssel zu greifen und sie wie einen mit einem Griffknopf versehenen Deckel zu behandeln.

FIG. 2

EP 0 669 096 A1

Die als Küchengeräte verwendeten Topfdeckel sind häufig mit einem vorspringenden mittigen Griffknopf versehen, was verhindert, dass sie beispielsweise flach auf einem Tisch liegen können.

Es ist daher Aufgabe der vorliegenden Erfindung, den Griffknopf eines Küchengeräts so zu gestalten, dass dieses flach auf einer ebenen Fläche liegen kann.

Diese Aufgabe wird erfindungsgemäss durch einen Griffknopf mit den im kennzeichnenden Teil des Patentanspruchs 1 angegebenen Merkmalen gelöst.

Weitere vorteilhafte Ausführungen der Erfindung sind in den abhängigen Ansprüchen angegeben.

Im folgenden wird die Erfindung beispielsweise anhand einer Zeichnung näher erläutert. Es zeigt:

Fig. 1    eine Querschnittdarstellung eines Griffknopfs mit einem Saugnapf und einem Haltering nach der Erfindung,

Fig. 2    eine Querschnittdarstellung eines erfindungsgemässen Saugnapfs, und

Fig. 3    eine Querschnittdarstellung eines Halterings nach der Erfindung.

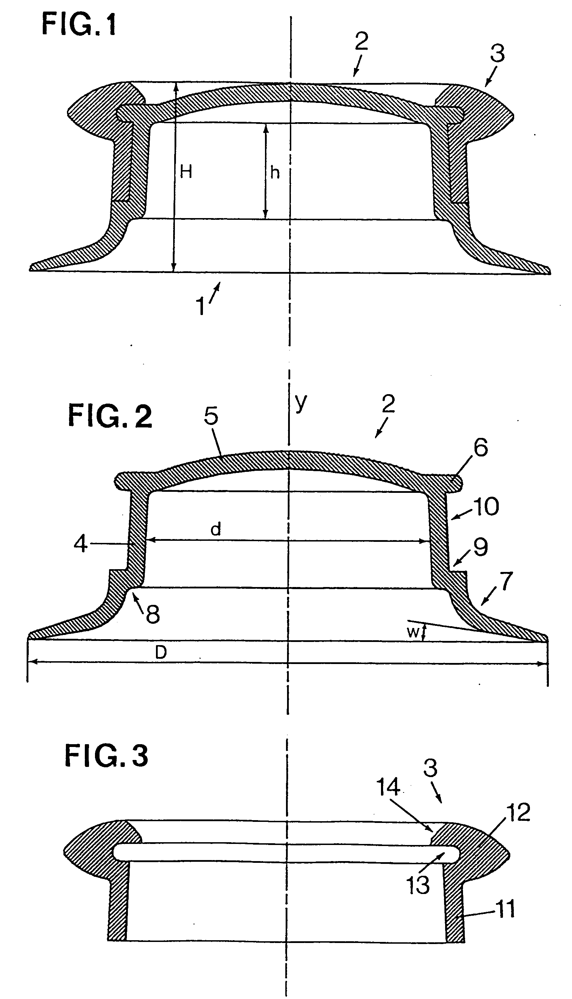

Der in Fig. 1 dargestellte Griffknopf 1 umfasst einen Saugnapf 2 und einen Haltering 3. Der Saugnapf 2 (Fig. 2) weist eine zylindrische oder stumpfkegelförmige Wand 4 auf, deren Höhe h (Fig. 1) kleiner als der mittlere Innendurchmesser d des zumindest angenähert durch die Wand 4 gebildeten Zylinders ist, wobei beispielsweise die Beziehung

$$2,2 \leqq d/h \leqq 3,8$$

gilt. Vorzugsweise kann jedoch d/h = 3 sein. Der obere Teil des Saugnapfs 2 ist durch eine etwas nach oben gewölbte Deckelwand 5 geschlossen, die eine kleine flanschförmige abgerundete seitliche Erweiterung 6 aufweist.

Der untere Teil des Saugnapfs ist offen, und die zylindrische Wand 4 ist im unteren Bereich trichterförmig nach aussen erweitert. Der untere Rand dieses trichterförmigen Teils 7 bildet im Querschnitt einen spitzen Winkel w mit einer senkrecht zur Symmetrieachse Y des Saugnapfs verlaufenden Ebene. Für den Winkel w gilt beispielsweise die Beziehung

$$0,15 \leqq \tan w \leqq 0,3.$$

Vorzugsweise kann jedoch tan w = 0,15 sein. Für den äussersten Randdurchmesser D des trichterförmigen Teils 7 gilt die Beziehung

$$1,4 \leqq D/d \leqq 2,8.$$

Vorzugsweise kann jedoch D/d = 1,83 sein.

Für die Gesamthöhe H des Saugnapfs 2 gilt die Beziehung

$$1,4 \leqq H/h \leqq 2,8.$$

Vorzugsweise kann jedoch H/h = 2 sein.

Im Bereich zwischen dem trichterförmigen Teil 7 und der Wand 4 sind eine innere Schulter 8 und eine äussere Schulter 9 ausgebildet. Durch die Schulter 8, die auch entfallen könnte, erhält der Trichter 7 eine grössere Elastizität.

Zwischen der Schulter 9 und dem unteren Rand der Erweiterung 6 ergibt sich eine vorzugsweise zylindrische Vertiefung 10.

Der Haltering nach Fig. 3 weist einen zumindest angenähert zylindrischen oder kegelförmigen Halteteil 11 und einen Ringteil 12 auf, wobei der mittlere Durchmesser des Ringteils 12 grösser als der mittlere Durchmesser des Halteteils 11 ist. Der äussere Bereich des Ringteils 12 ist im Querschnitt vorzugsweise zumindest angenähert in Form eines Bogenwinkels ausgestaltet. Im inneren Bereich des Ringteils 12 ist eine Ringnut 13 vorhanden, die an die Erweiterung 6 (Fig. 2) angepasst ist. Im oberen Bereich des Ringteils 12 ist ebenfalls eine ringförmige Oeffnung 14 vorhanden.

Der Saugnapf 2, der aus einem weichen elastischen Material besteht, kann in den vorzugsweise aus einem starren Kunststoff hergestellten Haltering 3 eingeschnappt werden, derart, dass bei einer elastischen Verformung des Saugnapfs 2 sich die Wand 4 im Bereich der Vertiefung 10 an den Halteteil 11 des Halterings 3 anschmiegt, bis die Erweiterung 6 in die Ringnut 13 einrastet, wobei dann die gewölbte Dekkelwand 5 im Raum der Oeffnung 14 des Halterings 3 ihre ursprüngliche Form wiedererlangt.

Aus ästhetischen Gründen kann zwar der Saugnapf 2 wenigstens äusserlich eine rauhe Oberfläche aufweisen, die innere Oberfläche des trichterförmigen Teils 7 im Bereich des Winkels w ist jedoch vorzugsweise glatt, um eine gute Dichtigkeit und Adhäsion zu gewährleisten, wenn der trichterförmige Teil 7 gegen die Aussenseite eines griffknopflosen Deckels gepresst wird, um durch die Wirkung eines Luftunterdrucks im Saugnapf eine Haftkopplung zwischen ihm und dem Deckel zu bewirken. Der Saugnapf 2 wirkt dann gegebenenfalls auch ohne Haltering 3 als Griffknopf für einen Deckel. Ein solcher an sich griffknopflose Deckel kann beispielsweise hochwandig sein und auch als Schüssel bzw. als Servierschüssel verwendet werden. Der Saugnapf 2 ermöglicht daher eine griffknopflose Schüssel zu greifen und sie wie einen mit einem Griffknopf versehenen Deckel zu behandeln.

Der Ringteil 12 des Halterings 3 nach Fig. 3, der zur Verstärkung des Saugnapfs 2 dient, kann im Querschnitt auch eine andere Form aufweisen und beispielsweise oval, rund, lanzettförmig und dergleichen sein. Damit nach Umkehrung des Halterings er ungehindert flach auf einer ebenen Fläche liegen kann, ist vorzugsweise die Wand 5 so ausgestaltet, dass ihre Wölbung nicht aus der Oeffnung 14 herausragt.

**Patentansprüche**

1. Griffknopf für Küchengeräte, dadurch gekennzeichnet, dass er als Saugnapf (2) mit einem trichterförmigen Teil (7) aus einem elastischen Material ausgebildet ist.

2. Griffknopf nach Anspruch 1, dadurch gekennzeichnet, dass der Saugnapf (2) eine zumindest angenähert zylindrisch oder stumpfkegelförmig ausgestaltete Wand (4) mit einem mittleren Durchmesser d und einer Höhe h aufweist gemäss der Beziehung:
$$2 \leqq d/h \leqq 4.$$

3. Griffknopf nach Anspruch 1 oder 2, dadurch gekennzeichnet, dass der innere Rand des trichterförmigen Teils (7) im Querschnitt einen spitzen Winkel w mit einer senkrecht zur Symmetrieachse (Y) des Saugnapfs (2) verlaufenden Ebene bildet.

4. Griffknopf nach einem der Ansprüche 1 bis 3, dadurch gekennzeichnet, dass im Bereich zwischen dem trichterförmigen Teil (7) und der Wand (4) im Innern des Saugnapfs (2) eine innere Schulter (8) ausgebildet ist.

5. Griffknopf nach einem der Ansprüche 1 bis 4, dadurch gekennzeichnet, dass das vom trichterförmigen Teil (7) entfernte Ende der Wand (4) eine flanschförmige Erweiterung (6) aufweist, und dass der Saugnapf (2) aussenseitig im Bereich zwischen dem trichterförmigen Teil (7) und der Wand (4) eine äussere Schulter (9) aufweist, derart, dass zwischen der Erweiterung (6) und der Schulter (9) eine Vertiefung (10) vorhanden ist.

6. Griffknopf nach Anspruch 5, dadurch gekennzeichnet, dass zur Verstärkung des Saugnapfs (2) ein Haltering (3) mit einem zylindrischen Teil (11) vorhanden ist, derart, dass bei einer elastischen Verformung des Saugnapfs (2) sich die Vertiefung (10) an den zylindrischen Teil (11) des Halterings (3) anschmiegt.

7. Griffknopf nach Anspruch 6, dadurch gekennzeichnet, dass der Haltering (3) als Verlängerung des zylindrischen Teils (11) einen Ringteil (12) aufweist, und dass im inneren Bereich dieses Ringteils (12) eine an die Erweiterung (6) des Saugnapfs (2) angepasste Ringnut (13) vorhanden ist.

8. Griffknopf nach Anspruch 7, dadurch gekennzeichnet, dass der mittlere Durchmesser des Ringteils (12) grösser als der mittlere Durchmesser des zylindrischen Teils (11) ist, und dass der äussere Bereich des Ringteils (12) im Querschnitt zumindest angenähert in Form eines Bogenwinkels oder oval, rund oder lanzettförmig ausgestaltet ist.

9. Griffknopf nach einem der Ansprüche 6, 7 oder 8, dadurch gekennzeichnet, dass für den Winkel w die Beziehung
$$0,15 \leqq \tan w \leqq 0,3,$$
und/oder für den äussersten Randdurchmesser D des trichterförmigen Teils (7) die Beziehung
$$1,4 \leqq D/d \leqq 2,8$$
und/oder für die Gesamthöhe H des Saugnapfs (2) die Beziehung
$$1,4 \leqq H/h \leqq 2,8$$
gilt.

10. Griffknopf nach einem der Ansprüche 6 bis 9, dadurch gekennzeichnet, dass der Saugnapf (2) eine gewölbte Deckelwand (5) aufweist, die nicht aus der ringförmigen Oeffnung (14) des Halterings (3) herausragt.

# FIG.1

2

3

H

h

1

# FIG.2

5

y

2

6

10

d

9

4

7

8

D

w

# FIG.3

3

14

12

13

11

**Europäisches Patentamt**

# EUROPÄISCHER RECHERCHENBERICHT

Nummer der Anmeldung

EP 95 81 0121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE-A-32 14 533 (AMC INTERNATIONAL ALFA CORPORATION) 20.Oktober 1983 * das ganze Dokument * | 1,3 | A47J45/07 |
| A | | 6-8 | |
| | --- | | |
| A | US-A-2 541 819 (HUDSON) 13.Februar 1951 | | |
| | ----- | | |

|  |
|---|
| RECHERCHIERTE SACHGEBIETE (Int.Cl.6) |
| A47J |

Der vorliegende Recherchenbericht wurde für alle Patentansprüche erstellt

| Recherchenort | Abschlußdatum der Recherche | Prüfer |
|---|---|---|
| DEN HAAG | 9.Mai 1995 | Bodart, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.......................................................................................................

& : Mitglied der gleichen Patentfamilie, übereinstimmendes Dokument

EPO FORM 1503 03.82 (P04C03)